# EUROPÄISCHE PATENTSCHRIFT

(11) **EP 0 397 004 B1**
(45) Veröffentlichungstag und Bekanntmachung des Hinweises auf die Patenterteilung: **14.07.1993**
(21) Anmeldenummer: 90108209.9
(22) Anmeldetag: 30.04.1990
(51) Int. Cl.: B29C 47/00, B29C 47/38, B29C 47/60

(54) **Verfahren und Vorrichtung zur Herstellung verschleissfester und schockzäher Extrudate aus ultrahochmolekularem Polyethylen**
Method and device for producing wear- and shock-resistant extrudates from ultra-high-molecular polyethylene
Procédé et dispositif pour la fabrication de produits d'extrusion résistant au choc et à l'usure en polyéthylène hautement moléculaire

(30) Priorität: 12.05.1989 DE 3915603
(43) Veröffentlichungstag der Anmeldung: 14.11.1990
(73) Patentinhaber: BASF Aktiengesellschaft, 67063 Ludwigshafen (DE)
(72) Erfinder: Bauer, Peter, D-6700 Ludwigshafen (DE); Konrad, Rainer, Dr., D-6701 Goenheim (DE); Morgenstern, Herbert, D-6800 Mannheim 25 (DE); Schuch, Horst, Dr., D-6804 Ilvesheim (DE)

(56) Entgegenhaltungen:
- DD-A- 261 051
- DE-A- 3 644 521
- GB-A- 2 180 496

## Beschreibung

Die Erfindung betrifft ein Verfahren nach dem Oberbegriff des Patentanspruchs 1 sowie eine Vorrichtung zur Durchführung des Verfahrens entsprechend dem Oberbegriff des Patentanspruchs 2.

Aus der EP-A-0 190 878 ist es bekannt, ultrahochmolekulares Polyethylen (UHMW-PE) auf Einschnecken-Extruder zu verarbeiten. Dabei wird pulverförmiges Polyethylen mittels einer Extruderschnecke gefördert, aufgeschmolzen und über eine Düse mit einem Längen/Durchmesser-Verhältnis ≧10 ausgetragen. Um die gewünschten Fertigteileigenschaften erreichen zu können, werden die Extrudate über einen Abzug abgeführt, wobei sie entweder unverstreckt bleiben oder einem Verstreckungsverhältnis bis zu 30:1 unterworfen werden.

Die Förderwirkung der Extruder wird i.a. bestimmt durch das Verhältnis der Reibungskräfte am Zylinder zu denen auf der Extruderschnecke. Man versucht zwar, den dadurch vorgegebenen Grenzen der Förderwirkung zu begegnen, indem man die Zylinderinnenwand mit Nuten versieht. Diese verlieren jedoch im praktischen Betrieb ihre Wirkung, sobald sich durch Scherbeanspruchung in den Nuten soviel Wärme entwickelt hat, daß sich diese mit angeschmolzenen Kunststoffpartikeln zusetzen. Die Folgen führen zu thermischem Abbau des Materials oder aber zu einer Begrenzung des Extruderdurchsatzes auf extrem niedrige Förderleistungen. Die Aufschmelzenergie wird vorzugsweise über Wärmeleitung eingebracht, weshalb nur geringer Ausstoß erreicht und nur dünne Profile hergestellt werden können.

Mit der Erfindung soll die Herstellung verschleißfester und schockzäher Extrudate auf Einschnecken-Extrudern bei hohen Ausstoßleistungen ermöglicht werden. Als Besonderheit ist zusätzlich gefordert, daß ein Molekularabbau, der bei ultrahochmolekularem Polyethylen in besonders starkem Maße die Eigenschaften der Extrudate beeinträchtigt, nicht eintritt.

Verfahrenstechnisch wird diese Aufgabe durch Anspruch 1 gelöst.

Hierdurch läßt sich ein stabiles Förderverhalten bei hohem Fördergrad, beispielsweise >25 %, aufbauen.

Das Förderverhalten einer Extruderschnecke kann unabhängig von Durchmesser oder Betriebspunkt (Drehzahl) gekennzeichnet werden durch den Fördergrad. Dieser beschreibt das Verhältnis des tatsächlich geförderten Volumens (Menge/Schüttdichte/Drehzahl) zum Volumen eines Schneckenganges im Bereich der Einzugszone. Extruderschnecken erzeugen üblicherweise Fördergrade bis 25 %. Dieser ist abhängig von der gewählten Gangsteigung, den sich auf der Schnecke entgegenstellenden geometrischen Widerständen und der Viskosität der Schmelze. Durch intensive Kühlung der Nuten kann der Fördergrad gesteigert werden, wobei diese Maßnahme auch zu einem konstanten stabilen Förderverhalten führt, bei dem eine thermische Überbeanspruchung des eingesetzten Materials vermieden wird.

Bei der Übertragung dieser Arbeitsweise auf die Extrusion von PE-UHMW stellt sich jedoch heraus, daß beim Anheben der Drehzahlen, um die gewünschten hohen Durchsätze zu erreichen, nur noch zerklüftete Schmelzebrocken die Extruderschnecke verlassen. Um ausreichende Extrudatqualität erreichen zu können, wird das PE-UHMW in der Förderzone des Extruders zwischen Schneckenwelle und Extrudergehäuse gezielt geschert. Je nach Typ und Durchsatz des zu verarbeitenden PE-UHMW haben sich Geschwindigkeitsgefälle zwischen 50 und 1000 s⁻¹ insgesamt am zweckmäßigsten erwiesen.

Dabei wird das Polyethylen in der Förderzone auf eine Temperatur von 180 bis 280°C erwärmt und anschließend in eine schneckenfreie Zone überführt, in der die endgültige Formgebung des Extrudats erfolgt. Am Ende dieser Zone, in der nur minimale Schergeschwindigkeiten von bis zu 5 sec⁻¹ vorliegen, wird das Extrudat auf eine Oberflächentemperatur von weniger als 150°C abgekühlt. Die weitere Abkühlung des Schmelzeprofils erfolgt langsam in einem getrennten Arbeitsgang, um Lunker zu vermeiden. Auf diese Weise werden besonders verschleißfeste und schockzähe Halbzeuge erhalten.

Gegenstand der Erfindung ist weiterhin eine Vorrichtung zur Durchführung des Verfahrens. Sie besteht aus einem an seinen Enden eine Ein- und eine Auslaßöffnung enthaltenden Gehäuse, in dessen zylindrischer Bohrung eine Schneckenwelle drehbar ist, wobei das Gehäuse ein kühlbares Einzugsteil mit sich in Längsrichtung erstreckenden Nuten und ein heizbares Förderteil aufweist und wobei das Verhältnis L/D zwischen Länge L und Bohrungsdurchmesser D des Gehäuses etwa 15 bis etwa 30 und das Verhältnis l/d zwischen Länge L und Nenndurchmesser d der Schneckenwelle etwa 12 bis etwa 20 beträgt, so daß im Anschluß an das Förderteil ein schneckenwellenfreier Gehäuseabschnitt entsteht, der mit einem Auslaßrohr A verbunden ist und im Bereich der Auslaßöffnung kühlbar ist. Erfindungsgemäß ist die Schneckenwelle im Bereich des Förderteils zweigängig ausgebildet. Das Verhältnis Länge Auslaßrohr zu Durchmesser Auslaßrohr beträgt etwa 4 bis etwa 100.

Ein derart ausgebildeter Schneckenextruder gewährleistet stabile Förderverhältnisse und die erforderliche Homogenität in der Schmelze. Vorzugsweise ist die Schneckenwelle auf einer Länge von 7 bis 14 d, beginnend ab etwa 5 d hinter der Einlaßöffnung des Extrudergehäuses zweigängig. Durch den Aufbau vergleichsweise hoher Scherung in diesem Bereich und der geringen Scherung in dem sich anschließenden schneckenwellenfreien Gehäuseabschnitt werden Extrudate mit sehr guter Qualität und besonders glatter Oberfläche erhalten.

Die Vorrichtung nach der Erfindung wird nachfolgend unter Hinweis auf die Zeichnung anhand eines Ausführungsbeispiels näher erläutert.

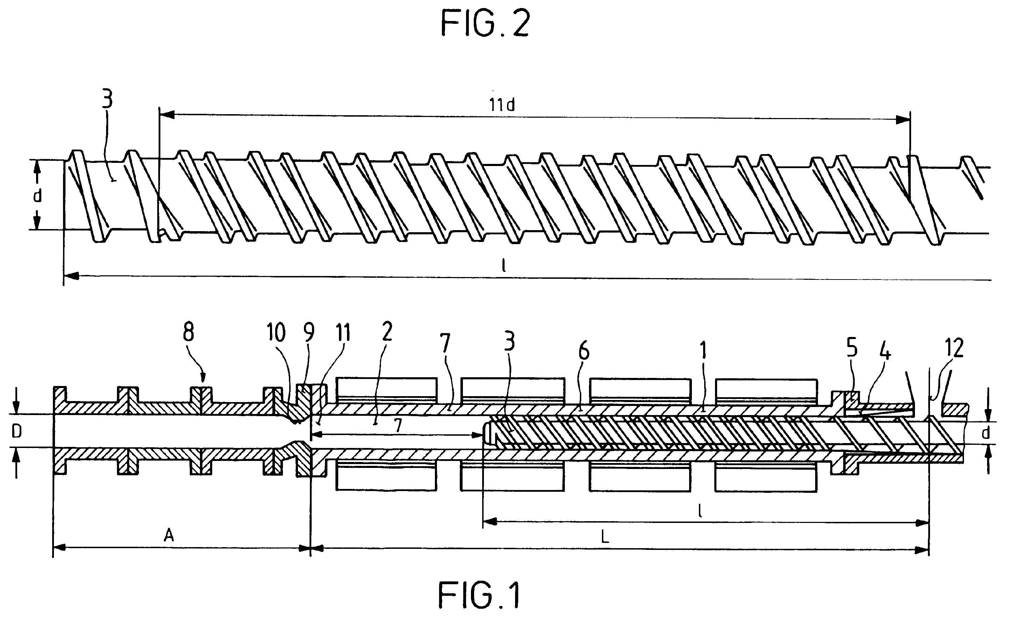

Figur 1 zeigt einen Einschnecken-Extruder im Längsschnitt und
Figur 2 die Schneckenwelle gemäß Figur 1 in vergrößerter Darstellung.

Im wesentlichen besteht die Vorrichtung aus einem Gehäuse (1), in dessen zylindrischer Bohrung (2) eine Schneckenwelle (3) drehbar ist. Das Gehäuse ist in ein kühlbares und Längsnuten (4) aufweisendes Einzugsteil (5), ein heizbares Förderteil (6) sowie einen sich an das Förderteil anschließenden schneckenwellenfreien Gehäuseabschnitt (7) unterteilt. Der Gehäuseabschnitt (7) ist mit einem mehrteiligen Auslaufrohr (8) verbunden. Von den Teilen des Auslaufrohres weist das an die Auslaßöffnung (11) anschließende Teil (9) eine Drosselstelle (10) auf. Mit (12) ist die Einlaßöffnung des Gehäuses bezeichnet.

Das Verhältnis zwischen Länge L und Bohrungsdurchmesser D des Gehäuses (1) - ohne das Auslaufrohr (8) - beträgt etwa 25 und das Verhältnis zwischen Länge 1 und Nenndurchmesser d der Schneckenwelle (3) beträgt etwa 16. Auf diese Weise entsteht ein Gehäuseabschnitt (7), ohne drehende Welle. Mit anderen Worten, die Schneckenwelle (3) ist im Verhältnis zu dem Gehäuse (1) verkürzt ausgeführt; sie ist nur im Einzugsteil (5) und im Förderteil (6) vorhanden. Im Bereich des Förderteils (6) ist die Schneckenwelle (3) zweigängig ausgebildet. Im dargestellten Ausführungsbeispiel beträgt der zweigängige Schneckenwellenabschnitt etwa 11 d.

Der Durchmesser des Auslaßrohres A entspricht dem Durchmesser des Schneckenzylinders; die Länge 8 mal dem Durchmesser; der letzte Abschnitt des Auslaßrohres ist kühlbar.

Bei einem Gehäusedurchmesser von 60 mm und einer Drehzahl der Schneckenwelle von 80 min⁻¹ werden ca. 100 kg einwandfreies Schmelzeprofil erzeugt. Der Staudinger-Index des Ausgangsmaterials beträgt 2050 und der Staudinger-Index des abgekühlten Extrudates 1970.

## Patentansprüche

1. Verfahren zur Herstellung verschleißfester und schockzäher Extrudate aus ultrahochmolekularem Polyethylen (PE-UHMW) mit einem Staudinger-Index nach DIN 53728 von etwa 800 bis etwa 3500 cm³/g, bei dem kleinteiliges bis pulverförmiges Polyethylen der gekühlten Einzugszone eines Einschnecken-Extruders aufgegeben und komprimiert, in einer Förderzone des Extruders auf eine Temperatur von 180 bis 280°C erwärmt, in eine schneckenfreie Zone überführt und unter Formgebung des Extrudats und Abkühlung auf eine Oberflächentemperatur von weniger als 150°C ausgetragen wird, dadurch gekennzeichnet, daß das Polyethylen in der Förderzone mit einem Geschwindigkeitsgefälle im radialen Spiel zwischen Schneckensteg und Extrudergehäuse von 50 bis 1000 sec⁻¹ bearbeitet wird.

2. Vorrichtung zur Durchführung des verfahrens nach Anspruch 1, mit einem an seinen Enden eine Ein- und eine Auslaßöffnung enthaltenden Gehäuse, in dessen zylindrischer Bohrung eine Schneckenwelle drehbar ist, wobei das Gehäuse ein kühlbares Einzugsteil mit sich in Längsrichtung erstreckenden Nuten und ein heizbares Förderteil aufweist, und wobei das Verhältnis L/D zwischen Länge L und Bohrungsdurchmesser D des Gehäuses etwa 15 bis etwa 30 und das Verhältnis l/d zwischen Länge l und Nenndurchmesser d der Schneckenwelle etwa 12 bis etwa 20 beträgt, so daß im Anschluß an das Förderteil ein schneckenwellenfreier Gehäuseabschnitt entsteht, der mit einem Auslaßrohr A verbunden ist und im Bereich der Auslaßöffnung kühlbar ist, dadurch gekennzeichnet, daß die Schneckenwelle (3) im Bereich des Förderteils (6) zweigängig ausgebildet ist und daß das Verhältnis Länge Auslaßrohr zu Durchmesser Auslaßrohr etwa 4 bis etwa 100 beträgt.

## Claims

1. A method for producing hardwearing and shock-resistant extrudates of ultra-high molecular weight polyethylene (UHMW-PE) having an intrinsic viscosity according to DIN 53728 of from about 800 to about 3,500 cm³/g, in which finely divided polyethylene or polyethylene powder is introduced into the cooled feed zone of a single-screw extruder and compressed therein, heated to 180-280°C in a transport zone of the extruder, transferred to the screw-free zone and discharged with shaping of the extrudate and cooling to a surface temperature of less than 150°C, wherein the polyethylene is processed in the transport zone using a velocity gradient of from 50 to 1,000 sec⁻¹ in the radial play between the screw flight and the extruder barrel.

2. An apparatus for carrying out the method as claimed in claim 1, possessing a barrel which contains an inlet orifice and an outlet orifice at its ends and in whose cylindrical bore a screw is rotatable, the barrel having a coolable feed zone with grooves extending in the longitudinal direction and a heatable transport zone, and the ratio of the length L to the bore diameter D of the barrel being from about 15 to about 30 and the ratio of the length l to the nominal diameter d of the screw being from about 12 to about 20, so that a screw-free barrel section is formed downstream of the transport zone, the said section being connected to an outlet pipe A and being coolable in the region of the outlet orifice, wherein the screw (3) is double-flighted in the region of the transport zone (6), and wherein the ratio of the length of the outlet pipe to the diameter of the outlet pipe is from about 4 to about 100.

## Revendications

1. Procédé de fabrication d'extrudats résistant à l'usure et tenaces au choc, en polyéthylène à poids moléculaire ultra-haut (UHMW-PE) d'un indice de Staudinger selon DIN 53728 d'environ 800 à environ 3500 cm³/g, selon lequel du polyéthylène finement divisé à pulvérulent est amené et comprimé dans la zone d'entrée d'une boudineuse à une vis, chauffé, dans une zone d'entrainement de la boudineuse, à une température de 180 à 280 degrés C, transporté dans une zone sans vis et sorti, en donnant forme à l'extrudat et avec refroidissement à une température superficielle inférieure à 150 degrés C, caractérisé par le fait que le polyéthylène est traité, dans la zone d'entrainement, avec un gradient de vitesse, en jeu radial entre le filet de vis et l'enveloppe de la boudineuse, de 50 à 100 s⁻¹.

2. Appareil pour la mise en oeuvre du procédé selon la revendication 1 avec une enveloppe présentant à ses extrémités une ouverture d'entrée et une ouverture de sortie et dans l'alésage cylindrique de laquelle un arbre de vis est monté tournant, l'enveloppe comportant une partie entrée refroidissable, à gorges s'étendant en direction longitudinale, et une partie entrainement chauffable, et le rapport L/D, entre la longueur et le diamètre d'alésage de l'enveloppe étant compris entre environ 15 et environ 30, et le rapport l/d entre la longueur l et le diamètre nominal d de l'arbre de vis étant compris entre environ 12 et environ 20, de telle sorte qu'à la suite de la partie entrainement apparaisse une section d'enveloppe exempte d'arbre de vis, qui est reliée à un tube de sortie A et est refroidissable au voisinage de l'ouverture de sortie, caractérisé par le fait que l'arbre de vis (3) est à deux pas dans la zone de la partie entrainement (6) et que le rapport entre la longueur et le diamètre du tube de sortie est d'environ 4 à environ 100.
